# EUROPÄISCHE PATENTANMELDUNG

(11) **EP 1 674 406 A1**
(43) Veröffentlichungstag der Anmeldung: **28.06.2006**
(21) Anmeldenummer: 04026755.1
(22) Anmeldetag: 11.11.2004
(51) Int. Cl.: B65D 75/58, B31B 19/64

(54) **Beutelverpackung mit peelbarer Siegelnaht**

(71) Anmelder: Alcan Technology & Management Ltd., 8212 Neuhausen am Rheinfall (CH)
(72) Erfinder: Roberts, Peter, CA11 8TQ Penrith (GB)

(57) **Zusammenfassung**

Bei einem Beutel (10) aus einer flexiblen Folie (12, 14) mit wenigstens einer Siegelschicht ist die Folie (12, 14) entlang einer Siegelnaht (16) gegen sich selbst oder gegen eine weitere Folie gesiegelt ist und begrenzt einen Füllgutraum (18). Die Siegelnaht (16) ist in einem Teilbereich (20) peelbar ausgebildet. Eine zur Herstellung des Beutels (10) geeignete flexible Folie ist eine Mehrschicht-Coextrusionsfolie mit einer Siegelschicht aus einem ionomeren elastomeren Polymer, die über eine aus einem Metallocen-katalysierten Polyethylen bestehende zweite Schicht mit wenigstens einer weiteren Schicht aus Homo- oder Copolymer Polypropylen oder Polyethylen verbunden ist.

## Beschreibung

Die Erfindung betrifft einen Beutel aus einer flexiblen Folie mit wenigstens einer Siegelschicht, wobei die Folie entlang einer Siegelnaht gegen sich selbst oder gegen eine weitere Folie gesiegelt ist und einen Füllgutraum begrenzt. Die Erfindung betrifft auch ein Verfahren und eine flexible Folie zur Herstellung des Beutels.

Beutel aus flexiblem Folienmaterial sind heute als Verpackung für flüssige und schütt- oder rieselfähige Füllgüter aller Art weit verbreitet. Bekannte Beutelverpackungen sind beispielsweise Flach- Stand- und Schlauchbeutel in verschiedenen Grössen zur Verwendung in Haushalt und Industrie. Allen Beuteln gemeinsam ist die Bildung eines dicht verschlossenen Füllgutraumes, der durch Siegeln von flexiblem Folienmaterial gegen sich selbst oder gegen ein weiteres Folienmaterial unter Ausbildung einer untrennbaren Siegelnaht entsteht. Üblicherweise wird zunächst ein vorgefertigter Beutel hergestellt, der an einer Stelle noch offen ist. Nach dem Einfüllen des Füllgutes erfolgt das dichte Verschliessen des Beutels in einem weiteren Siegelschritt.

Zur Entnahme des Füllgutes werden derartige Beutel beispielsweise quer zur Siegelnaht aufgerissen oder an einer hierfür bezeichneten Stelle mit einer Schere aufgeschnitten. Oft weisen Beutel auch eine Öffnungshilfe in der Form einer in der Siegelnaht angeordneten Einreisskerbe auf.

Der Erfindung liegt die Aufgabe zugrunde, einen Beutel der eingangs genannten Art zu schaffen, der einerseits auf einfache Art aufgerissen werden kann und andererseits auch ohne übermässigen Kraftaufwand und ohne mechanische Hilfsmittel die Bildung einer Ausgiessöffnung ermöglicht.

Zur erfindungsgemässen Lösung der Aufgabe führt, dass die Siegelnaht in einem Teilbereich peelbar ausgebildet ist.

Zur Bildung einer Ausgiessöffnung verläuft der peelbare Teilbereich der Siegelnaht bevorzugt über eine Beutelecke.

Zweckmässigerweise ist in der Siegelnaht wenigstens eine Aufreisshilfe, insbesondere eine Kerbe, angeordnet.

Eine bevorzugte Ausführung eines Beutels ist ein Standbeutel mit einem Boden und einer vom Boden aufragenden Beutelwand, wobei das dem Boden entfernt liegende Beutelende wenigstens eine Beutelecke bildet und der peelbare Teilbereich der Siegelnaht über die Beutelecke verläuft. In der Siegelnaht unterhalb der Beutelecke kann wenigstens eine Aufreisshilfe, insbesondere eine Kerbe, angeordnet sein.

Bei einem Verfahren zur Herstellung eines Beutels aus einer flexiblen Folie mit wenigstens einer Siegelschicht, bei dem die Folie gegen sich selbst unter Bildung einer Siegelnaht zum Beutel gesiegelt wird, wird die Siegelnaht zur Bildung einer peelbaren Verbindung zwischen den gegeneinander gesiegelten Folien in einem Teilbereich bei einer ersten Temperatur T₁ und zur Bildung einer untrennbaren Verbindung, d.h. einer Verbindung mit sehr hoher Peelfestigkeit, zwischen den gegeneinander gesiegelten Folien bei einer gegenüber der ersten Temperatur T₁ höheren zweiten Temperatur T₂ gesiegelt.

Die erste Temperatur T₁ liegt bevorzugt in einem Bereich von 95 bis 115 °C und die zweite Temperatur T₂ in einem Bereich > 130 °C. Die Breite des Temperaturfenster zur Herstellung einer Siegelnaht mit guten Peeleigenschaften beträgt etwa 20 °C. Innerhalb dieses Temperaturfensters steigt die zur Trennung der Siegelnaht erforderliche Peelkraft mit zunehmender Temperatur an.

Im Allgemeinen liegt die erste Temperatur T₁ zur Erzeugung einer peelbaren Siegelung etwa 15 bis 30 °C tiefer als die zweite Temperatur T₂ zur Erzeugung einer untrennbaren Siegelung bzw. einer Siegelung mit sehr hoher Peelfestigkeit.

Die Einstellung der gewünschten Peelkraft bzw. der Untrennbarkeit einer Siegelnaht erfolgt durch entsprechende Veränderung der Temperatur in der Sealingstation.

Eine zur Herstellung eines erfindungsgemässen Beutels mit den gewünschten Peeleigenschaften einer Siegelnaht geeignete flexible Folie umfasst wenigstens drei Schichten und wird über eine Mehrschicht-Blasfolien-Coextrusion mit der folgenden Schichtfolge hergestellt:
A. Siegelschicht aus einem ionomeren elastomeren Polymer
B. Metallocen-katalysiertes Polyethylen
C. Homo- oder Copolymer Polyethylen oder Polypropylen

Anstelle einer einzigen dritten Schicht C kann die Folie zwei oder mehr Schichten C₁- C2, C3, ...Cₙ enthalten.

Die Dicke der Folie liegt je nach Anwendung üblicherweise im Bereich von etwa 30 bis 150 µm. Die Foliendicke ist jedoch nicht auf diesen Bereich beschränkt. Je nach gewünschter Dicke der Folien kann die Anzahl der Schichten C aus Homo- oder Copolymer Polyethylen oder Polypropylen variieren.

Die oben angegebenen Temperaturbereich gelten insbesondere für die erfindungsgemässe Mehrschicht-Coextrusionsfolie mit der Schichtfolge A-B-C (bzw. C₁ - C2, C3, ...Cₙ).

Mit der erfindungsgemässen Mehrschicht-Coextrusionsfolie lassen sich Beutel jeglicher Grösse und Form herstellen. Der wesentliche Vorteil der Mehrschicht-Coextrusionsfolie gegenüber bekannten, aus wenigstens zwei Filmen zusammengesetzten Verpackungsfolien nach dem Stand der Technik liegt darin, dass die Dualität einer peelbaren und einer untrennbaren Siegelung erfindungsgemäss mit einer einzigen Folie bzw. einem einzigen Film erreicht werden kann.

Ein weiterer Vorteil der erfindungsgemässen Mehrschicht-Coextrusionsfolie zeigt sich beim Aufreissen eines Beutels. Wir die Aufreisskerbe so positioniert, dass der von der Kerbe initiierte Riss in der Laufrichtung der extrudierten Folie liegt, so verläuft der Riss beim weiteren Aufreissen des Beutels weiter linear in dieser Richtung. Diese Eigenschaft wird bei der Beutelherstellung berücksichtigt, indem die gedachte Aufreisslinie mit den zugehörigen Aufreisskerben parallel zur Folienlaufrichtung gelegt wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Seitenansicht eines teilweise verschlossenen Beutels;
- Fig. 2 einen Schnitt durch den Beutel von Fig. 1 nach deren Linie |-|;
- Fig. 3 den Querschnitt durch eine flexible Folie.

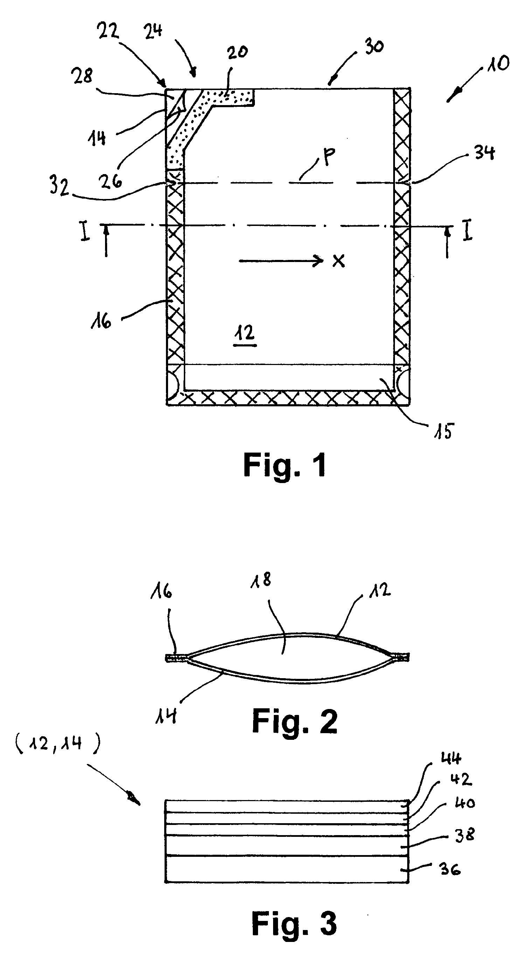

Ein in den Fig. 1 und 2 gezeigter Beutel 10 besteht aus zwei etwa rechteckförmigen Wandteilen 12, 14 aus flexiblem Folienmaterial. Die beiden Wandteile 12, 14 sind über eine gemeinsame Siegelnaht 16 untrennbar bzw. mit hoher Peelfestigkeit miteinander verbunden und begrenzen einem Füllgutraum 18. In einem Bodenbereich des Beutels 10 ist ein zwischen die Wandteile 12, 14 eingesiegeltes Bodenteil 15 aus demselben Folienmaterial angedeutet. Beim Befüllen des Beutels 10 wird das Bodenteil 15 zu einer Standfläche, d.h. der Beutel 10 ist ein so genannter Standbeutel.

Ein peelbarer Teilbereich 20 der Siegelnaht 16 verläuft über eine dem Bodenteil 15 entfernt liegende Beutelecke 22 und ist Bestandteil eines leicht zu öffnenden Verschlusses 24. Zum Öffnen dieses Verschlusses 24 dienen im Bereich der Beutelecke 22 angeordneten Aufreisslaschen 26, 28, die sich aus den in diesem Eckbereich nicht gegeneinander gesiegelten Wandteilen 12, 14 ergeben.

Der Beutel 10 weist in einem Randbereich eine Öffnung 30 auf. Die Öffnung 30 ist begrenzt durch den Rand der Wandteile 12, 14, die in diesem Bereich noch nicht gegeneinander gesiegelt sind. Nach dem Befüllen des Beutels 10 mit einem Füllgut werden die beiden Wandteile 12, 14 im Bereich der Öffnung 30 gegeneinander gesiegelt und der Beutel wird auf diese Weise verschlossen.

Unterhalb des peelbaren Teilbereichs 20 sind zwei einander gegenüberliegende Aufreisskerben 32, 34 in der Siegelnaht 16 angeordnet. Die gedachte Verbindungslinie p zwischen den beiden Aufreisskerben 32, 34 liegt parallel zur Laufrichtung x der Folie, aus der die Wandteile 12, 14 gebildet sind.

Der Beutel lässt sich auf zwei Arten öffnen:
- Durch Ziehen an den Aufreisslaschen 26, 28 werden die Folien 12, 14 im Bereich der Beutelecke 22 unter Bildung einer Ausgiessöffnung voneinander gepeelt.
- Durch Ziehen am oberen Ende des Beutels quer zur Siegelnaht 16 mit den Aufreisskerben 32, 34 reissen die Wandteile 12, 14 des Beutels 10 bei einer der Aufreisskerben 32, 34. Bei weiterem Ziehen setzt sich der Riss durch die beiden Wandteile 12, 14 linear und parallel zur Folienlaufrichtung x unter Bildung einer grossen Entnahmeöffnung quer über den Beutel 10 bis zum gegenüberliegenden Beutelrand fort.

Die unterschiedliche Siegelstärke, die einerseits zur untrennbaren Siegelnaht 16 mit sehr hoher Peelfestigkeit und andererseits zum peelbaren Teilbereich 20 der Siegelnaht 16 führt, wird durch unterschiedliche Siegeltemperaturen herbeigeführt.

Ein zur Herstellung des Beutels 10 besonderes geeignetes Folienmaterial weist gemäss Fig. 3 eine Siegelschicht 36 aus einem ionomeren elastomeren Polymer auf. An die Siegelschicht 36 schliesst eine Schicht 38 aus einem Metallocen-katalysierten Polyethylen einer Dichte von 0.927 bis 0.956 g/cm³ an. Weitere Schichten 40, 42, 44 bestehen wahlweise aus Homo- oder Copolymer Polyethylen oder Polypropylen.

## Patentansprüche

1. Beutel aus einer flexiblen Folie (12, 14) mit wenigstens einer Siegelschicht, wobei die Folie (12, 14) entlang einer Siegelnaht (16) gegen sich selbst oder gegen eine weitere Folie gesiegelt ist und einen Füllgutraum (18) begrenzt,
**dadurch gekennzeichnet, dass**
die Siegelnaht (16) in einem Teilbereich (20) peelbar ausgebildet ist.

2. Beutel nach Anspruch 1, **dadurch gekennzeichnet, dass** der peelbare Teilbereich (20) der Siegelnaht (16) über eine Beutelecke (22) verläuft.

3. Beutel nach Anspruch 1 oder 2, **dadurch gekennzeichnet, dass** in der Siegelnaht (16) wenigstens eine Aufreisshilfe (32, 34), insbesondere eine Kerbe, angeordnet ist.

4. Beutel nach Anspruch 1, **dadurch gekennzeichnet, dass** er als Standbeutel mit einem Boden und einer vom Boden aufragenden Beutelwand ausgebildet ist, wobei das dem Boden entfernt liegende Beutelende wenigstens eine Beutelecke (22) bildet und der peelbare Teilbereich (20) der Siegelnaht (16) über die Beutelecke (22) verläuft.

5. Beutel nach Anspruch 4, **dadurch gekennzeichnet, dass** in der Siegelnaht (16) unterhalb der Beutelecke (22) wenigstens eine Aufreisshilfe (32, 34), insbesondere eine Kerbe, angeordnet ist.

6. Verfahren zur Herstellung eines Beutels aus einer flexiblen Folie (12, 14) mit wenigstens einer Siegelschicht, wobei die Folie (12, 14) gegen sich selbst unter Bildung einer Siegelnaht (16) zum Beutel (10) gesiegelt wird, **dadurch gekennzeichnet, dass** die Siegelnaht (16) in einem Teilbereich (20) bei einer ersten Temperatur T₁ zur Bildung einer peelbaren Verbindung zwischen den gegeneinander gesiegelten Folien (12, 14) und bei einer gegenüber der ersten Temperatur T₁ höheren zweiten Temperatur T₂ zur Bildung einer untrennbaren Verbindung zwischen den gegeneinander gesiegelten Folien (12, 14) gesiegelt wird.

7. Verfahren nach Anspruch 6, **dadurch gekennzeichnet, dass** die erste Temperatur T₁ in einem Bereich von 95 bis 115°C und die zweite Temperatur T₂ in einem Bereich > 130°C liegt.

8. Verfahren nach Anspruch 7, dass die erste Temperatur T₁ 15 bis 30 °C tiefer liegt als die zweite Temperatur T₂.

9. Flexible Folie mit einer Siegelschicht (36) zur Herstellung eines Beutels (10) nach einem der Ansprüche 1 bis 5, **dadurch gekennzeichnet, dass** die Folie eine Mehrschicht-Coextrusionsfolie ist und Siegelschicht (36) aus einem ionomeren elastomeren Polymer besteht, die über eine aus einem Metallocen-katalysierten Polyethylen bestehende zweiten Schicht (38) mit wenigstens einer weiteren Schicht (40, 42, 44) aus Homo- oder Copolymer Polypropylen oder Polyethylen verbunden ist.

10. Flexible Folie nach Anspruch 9, **dadurch gekennzeichnet, dass** die zweite Schicht (38) aus einem Metallocen-katalysierten Polyethylen einer Dichte von 0.927 bis 0.956 g/cm³ besteht.
